# EUROPEAN PATENT SPECIFICATION

(11) **EP 2 797 084 B1**
(45) Date of publication and mention of the grant of the patent: **29.04.2020**
(21) Application number: 12859068.4
(22) Date of filing: 16.05.2012
(51) Int. Cl.: C08K 5/49

(54) **POWER AND/OR TELECOMMUNICATIONS CABLES COMPRISING A CERAMIFIABLE COMPOSITION**
STROM-UND/ODER TELEKOMMUNIKATIONSKABELN ENTHALTEND EINE KERAMISIERENDE ZUSAMMENSETZUNG
CÂBLES POUR L'ÉNERGIE ET/OU LES TÉLÉCOMMUNICATIONS CONTENANT UNE COMPOSITION POUVANT SE TRANSFORMER EN CÉRAMIQUE

(30) Priority: 23.12.2011 ES 201132090
(43) Date of publication of application: 29.10.2014
(73) Proprietor: Grupo General Cable Sistemas, S.A., 08036 Barcelona (ES)
(72) Inventor: MARTINEZ AGEA, Juan de Dios, E-08036 Barcelona (ES); BARBETA ESTRADA, Javier, E-08036 Barcelona (ES); CALVERAS IBAÑEZ, Daniel, E-08036 Barcelona (ES); GARCÍA LÓPEZ, David, E-08036 Barcelona (ES); POVEDA BERNAL, Jesús, E-08036 Barcelona (ES); ALONSO SASTRE, Carlos, E-08036 Barcelona (ES)
(74) Representative: Ponti & Partners, S.L.P
(86) International application number: PCT/ES2012/070346
(87) International publication number: WO 2013/093140

(56) References cited:
- EP-A1- 1 582 562
- EP-A1- 2 796 492
- WO-A1-2005/095545
- US-A1- 2003 178 220
- US-A1- 2003 199 623
- US-A1- 2006 269 771
- US-A1- 2007 246 240
- US-A1- 2008 093 107

## Description

### Object of the Invention:

More specifically the invention refers to a power and/or telecommunications cable, comprising at least one extruded layer that enables it to bear extreme heat conditions, by coating the conductor.

### State of the Art:

On the market there are, and therefore can be considered as state of the art of the present invention, increased safety cables in which the coating of the conductor is applied typically (but not exclusively) to the safety and high security cables, i.e. power and/or telecommunications fire retardant cables, or cables destined to be kept in service for indefinite time while being subject to intense heat or directly to fire. Previous inventions, international PCT application no. WO 2006/000468 A2 for instance, mentions improvement of fire resistance using coating and/or insulation materials that employ filosilicates, with or without organic modification to improve compatibility with organic matrices, for instance. US2007/246240, US2003/199623, and EP1582562 refer to cables having flame-retarding properties. EP2796492 discloses compositions comprising inorganic phosphate arranged hierarchically on phyllosilicates.

To date, one of the most important challenges of the cable industry, is to improve behaviour and performance of cables in extreme conditions, such those found in fires. Essentially for safety reasons, it is essential to maximise on one hand the flame retardant capacity and on the other fire resistance, with the aim of ensuring continued functionality.

It must be taken into account that retarding the propagation of flames is time gained for evacuation of the location or implementing the resources for extinguishing. In case of fire, fire-resistant cables must be able to resist the fire and continue in operation and also limit their degradation. In addition, a safety cable should not be harmful for the environment, i.e., it should not emit toxic and/or opaque smoke when subjected to extreme heat. For this reason, in the last few years, halogen-free cables are ever more commonly used.

Increased safety cables are schematically composed of at least one electrical or optical conductor wrapped by at least one electrically insulating layer. The cable also may have a protective layer surrounding one or more insulated conductor elements.

### Scope of the Invention:

The purpose of the present invention is to remedy drawbacks in the state of the art solutions. Currently halogen-free fire retardant cables are made with non-combustible compounds with inorganic fillers of the metallic hydroxide type, commonly used in 50-70% weight with the resulting problems for processing and inferior mechanical properties. These fireproofing systems create a layer of carbon that lacks the necessary stability for optimum performance. In addition, some critical cables do not manage to pass the non-fire propagation test. In fire-resistant cables, basically two technologies are currently used: on the one hand, the use of mica tape applied directly to the conductor, a slow and very expensive process, and on the other, the extrusion of silicone rubber that acts as insulation (a material that is expensive and difficult to extrude).

### Description of the Invention:

The proposed solution according to the present invention is to obtain a power and/or telecommunications cable according to the appended claims.

Section "a" - Organic polymers: A wide variety of organic polymers can be used, as is known in the state of the art. Basically it/they will be extrudable and may be thermoplastic or elastomeric. The organic polymer may be a single polymer or the mixture of several organic polymers, preferably: olefin, vinyl polymers, acrylates and/or methacrylate.

Olefin polymers are preferable, either one or a combination of the following compounds: homopolymers, or ethylene and/or propylene copolymers, or mixtures thereof. Can also be polyesters, polyethers, polyester-polyether copolymers and/or mixtures thereof.

Examples of these organic polymers that have been tested and work adequately for the present invention are the following compounds, either alone or mixed together: polyethylene (PE); polypropylene (PP); thermoplastic propylene-ethylene copolymers; ethylene-propylene (EPR) or ethylene-propylene-diene (EPDM) rubber; natural rubber; butyl rubber; ethylene and vinyl acetate copolymers (EVA); ethylene and ethylene acrylate copolymers (EEA); ethylene and butyl acrylate copolymers; and/or ethylene-alpha olefin copolymers.

Section "b" - Inorganic phosphate arranged hierarchically on phyllosilicates: These types of materials, especially those based on pseudolaminar phyllosilicates such as sepiolite and attapulgite, enable a notable and unexpected improvement of performance when subject to a flame and high temperature when incorporated into a polymer matrix. These materials can be incorporated and dispersed adequately in these polymer matrices to obtain homogenous dispersion through the polymer, avoiding agglomeration. In addition, when the temperature increases, as result of the fire, there is a polymerisation reaction, giving rise to the formation of a protective barrier that is more consistent and homogenous than the layers of carbon obtained with traditional flame-retardants. Therefore, the use of these hierarchically arranged structures of inorganic phosphates such as for instance, aluminium phosphate, on phyllosilicates and especially on sepiolite or attapulgite, remedy the problem of lack of stiffness and firmness of the carbon residue generated. The carbon acts as a protective barrier, limiting the transfer of heat in the material, the volatilisation of degradation products and the diffusion of the oxygen necessary to produce and maintain this combustion. During the combustion period, an inorganic polymer is generated, the network of which gives rise to a protective layer with a ceramifiable character, possessing excellent mechanical properties of stiffness and compactation, providing magnificent resistance to flames, as well as notable dielectric properties.

The cation of the inorganic phosphate can be: Al, Zn, Cd, Fe, Sn, Mn, Ni, Co, B, Sb, W, Mo, Zr, Cu, Ga, In, Be, Mg, Ca, Sr, Ba, Na, Li, K, Rb, Cs and mixtures thereof.

The 2:1 phyllosilicate is laminar or acicular morphology. Specifically a smectite of montmorillonite, saponite, stevensite, beidellite, nontronite, hectorite type or mixtures thereof, the dioctahedral smectite, trioctahedral smectite, sepiolite, attapulgite or mixtures thereof being preferred.

The aforementioned sepiolite is preferably of rheological degree.

The aforementioned attapulgite is preferably of rheological degree.

One of the novelties of the present invention and that is key for the improvement of performance in fire tests, both regarding propagation as well as resistance, is the use of these inorganic phosphates hierarchically arranged on phyllosilicates. The amounts in parts by weight per 100 parts of polymer is between 1 and 30.

Section "c" - Other secondary inorganic fillers: Other secondary inorganic fillers such as metallic hydroxides, metallic oxides, kaolins, silicas, borates, stannates, molybdates, graphites, glasses, all used and known by skilled people when formulating compounds for cables. The amounts in parts by weight per 100 parts of polymer range from 1 - 200.

This optimum extruded composition, in the case of a fire, forms a ceramic layer that protects the fire retardant and/or fire-resistant cables.

### Description of an embodiment of the invention:

As shown in the following examples, the use of inorganic phosphates hierarchically arranged on phyllosilicates is essential to pass the fire tests. The ceramic compound formed has mechanical features that enable it to protect internal parts of the cable and avoid them being affected by fire, as well very good electrical characteristics, as it allows the cable to continue in service in fire-resistant cables. It can be highlighted that the compositions shown below may be used as a cable cover and/or insulation. The amounts are shown in phr.

### Example 1:

Fire retardant unipolar cable RZ1-K acc. to/IEC 60332-3-24.

With the aim of comparing the efficiency of this invention with current technologies, four different cover formulations used in the same thickness and with the same insulation are described below.

| (phr) | Compound A | Compound B | Compound C | Compound D |
|---|---|---|---|---|
| EBA 17% | 60 | 60 | 60 | 60 |
| PEO | 25 | 25 | 25 | 25 |
| Graf. PEO | 15 | 15 | 15 | 15 |
| Antioxidants | 1.5 | 1.5 | 1.5 | 1.5 |
| ATH | 180 | 165 | 165 | 165 |
| Sepiolite | - | 15 | - | - |
| Organically mod. sepiolite | - | - | 15 | - |
| Mod. sepiolite and function. AlPO4 | - | - | - | 15 |
| IEC 60332-3-24 | Does not comply | Does not comply | Does not comply | Comply |
| Distance burnt (m) | 3.5 | 3.5 | 3.5 | 1.2 |
| Minutes to burn | Should extinguish after 12 minutes | Should extinguish after 19 minutes | Should extinguish after 28 minutes | Self-extinguish ing 4 minutes after the end of the test |

As se can be seen in the example, the fact that fibrous phyllosilicates are used unmodified and without functionalisation improves the performance of the cable in the fire test without passing the fire propagation test. When the phyllosilicate is organically modified (Compound 3) the improvement is more important, but it does not pass the test (the time taken to completely burn is extended, but the length burn exceeds 2.5 m).

The fire propagation test is not passed until the fibrous phyllosilicate arranges the inorganic phosphate hierarchically (aluminium phosphate in the example). With compound 4, the cable passes the test, taking only 4 minutes for the fire to extinguish.

### Example 2:

Fire-resistant cable according to EN 50200. Insulation compound with the same thickness and same halogen-free cover compound:

| (phr) | Compound A | Compound B | Compound C | Compound D |
|---|---|---|---|---|
| PEO | 90 | 60 | 60 | 60 |
| Graf. PEO | 10 | 25 | 25 | 25 |
| Fibre-glass | 40 | 15 | 15 | 15 |
| Antioxidants | 1.5 | 1.5 | 1.5 | 1.5 |
| Sepiolite | - | 15 | - | - |
| Organically mod. sepiolite | - | - | 15 | - |
| Mod. sepiolite and function. AlPO4 | - | - | - | 15 |
| EN 50200 | Does not comply | Does not comply | Does not comply | Comply |
| Minutes in service | 12 | 15 | 22 | >60 |

The example shows how composition D, on forming a ceramic layer, manages to protect the cable's integrity, and allows it to remain in service during the test (60 min.). The other compounds do not manage to form a sufficiently resistant ceramic layer with sufficient electrical resistance to allow the cable to remain operational.

Having sufficiently described this invention, it is easy to understand that any changes judged to be suitable may be made, whenever these changes do not alter of the essence of the invention summarised in the following claims.

## Claims

1. A power and/or telecommunication cable comprising one or more electrical and/or optical conductors covered by at least one electrically insulating layer, wherein said insulating layer comprises:
a) an extrusible organic polymer or a mixture of several extrusible organic polymers selected from olefin, vinyl, acrylate and methacrylate;
b) an inorganic phosphate arranged hierarchically on phyllosilicates in an amount between 1 and 30 parts by weight per 100 parts of polymer according to a); and
c) other secondary inorganic fillers, having at least one of the following compounds or a mixture of two or more of these compounds: metallic hydroxides, metallic oxides, kaolins, silicas, borates, stannates, molybdates, graphites and/or glasses, in an amount between 100 and 200 phr per 100 parts of polymer according to a).

2. The power and/or telecommunication cable, according to claim 1, further comprising a protective layer surrounding said one or more electrical and/or optical conductors covered by at least one electrically insulating layer, wherein said protective layer comprises:
a) an extrusible organic polymer or a mixture of several extrusible organic polymers selected from olefin, vinyl, acrylate and methacrylate;
b) an inorganic phosphate arranged hierarchically on phyllosilicates in an amount between 1 and 30 parts by weight per 100 parts of polymer according to a); and
c) other secondary inorganic fillers, having at least one of the following compounds or a mixture of two or more of these compounds: metallic hydroxides, metallic oxides, kaolins, silicas, borates, stannates, molybdates, graphites and/or glasses, in an amount between 100 and 200 phr per 100 parts of polymer according to a).

3. The power and/or telecommunication cable, according to claim 1 or 2, wherein the olefin polymer comprises one or a combination of the following compounds: homopolymers, ethylene and/or propylene copolymers, polyesters, polyethers, polyester-polyether copolymers and/or mixtures thereof.

4. The power and/or telecommunication cable, according to claim 3, wherein said olefin polymer is selected from polyethylene (PE), polypropylene (PP), thermoplastic propylene-ethylene copolymer, ethylene-propylene (EPR) or ethylene-propylene-diene (EPDM) rubber, natural rubber, butyl rubber, ethylene and vinyl acetate copolymer (EVA), ethylene and ethylene acrylate copolymer (EEA), ethylene and butyl acrylate copolymers, and ethylene-alpha olefin copolymers, or a mixture thereof.

5. The power and/or telecommunication cable, according to any of the preceding claims, wherein the inorganic phosphate has a cation which can be: Al, Zn, Cd, Fe, Sn, Mn, Ni, Co, B, Sb, W, Mo, Zr, Cu, Ga, In, Be, Mg, Ca, Sr, Ba, Na, Li, K, Rb, Cs and mixtures thereof.

6. The power and/or telecommunication cable, according to any of the preceding claims, wherein the phyllosilicate is a 2:1 type phyllosilicate of laminar or acicular morphology.

7. The power and/or telecommunication cable, according to claim 6, wherein the 2:1 phyllosilicate is a dioctahedral smectite, trioctahedral smectite, sepiolite, attapulgite or mixtures thereof.

8. The power and/or telecommunication cable, according to claim 7, wherein the smectite is of montmorillonite, saponite, stevensite, beidellite, nontronite, hectorite type or mixtures thereof.

## Patentansprüche

1. Energie- und/oder Telekommunikationskabel mit einem oder mehreren elektrischen und/oder optischen Leitern, die von mindestens einer elektrisch isolierenden Schicht bedeckt sind, wobei die isolierende Schicht umfasst:
a) ein extrusibles organisches Polymer oder eine Mischung aus mehreren extrusiblen organischen Polymeren, ausgewählt aus Olefin, Vinyl, Acrylat und Methacrylat;
b) ein anorganisches Phosphat, das hierarchisch auf Phyllosilikaten in einer Menge zwischen 1 und 30 Gewichtsteilen pro 100 Teile Polymer gemäß a) angeordnet ist; und
c) andere sekundäre anorganische Füllstoffe, die mindestens eine der folgenden Verbindungen oder ein Gemisch aus zwei oder mehreren dieser Verbindungen aufweisen: Metallhydroxide, Metalloxide, Kaoline, Kieselerde, Borate, Stannate, Molybdate, Graphite und/oder Gläser, in einer Menge zwischen 100 und 200 phr pro 100 Teile Polymer gemäß a).

2. Energie- und/oder Telekommunikationskabel nach Anspruch 1, das weiterhin eine Schutzschicht umfasst, die einen oder mehrere elektrische und/oder optische Leiter umgibt, die von mindestens einer elektrisch isolierenden Schicht bedeckt sind, wobei die Schutzschicht umfasst:
a) ein extrusibles organisches Polymer oder eine Mischung aus mehreren extrusiblen organischen Polymeren, ausgewählt aus Olefin, Vinyl, Acrylat und Methacrylat;
b) ein anorganisches Phosphat, das hierarchisch auf Phyllosilikaten in einer Menge zwischen 1 und 30 Gewichtsteilen pro 100 Teile Polymer gemäß a) angeordnet ist; und
c) andere sekundäre anorganische Füllstoffe, die mindestens eine der folgenden Verbindungen oder ein Gemisch aus zwei oder mehreren dieser Verbindungen aufweisen: Metallhydroxide, Metalloxide, Kaoline, Kieselerde, Borate, Stannate, Molybdate, Graphite und/oder Gläser, in einer Menge zwischen 100 und 200 phr pro 100 Teile Polymer gemäß a).

3. Energie- und/oder Telekommunikationskabel nach Anspruch 1 oder 2, wobei das Olefinpolymer eine oder eine Kombination der folgenden Verbindungen umfasst: Homopolymere, Ethylen- und/oder Propylen-Copolymere, Polyester, Polyether, Polyester-Polyether-Copolymere und/oder Mischungen davon.

4. Energie- und/oder Telekommunikationskabel nach Anspruch 3, wobei das Olefinpolymer ausgewählt ist aus Polyethylen (PE), Polypropylen (PP), thermoplastischem Propylen-Ethylen-Copolymer, Ethylen-Propylen (EPR) oder Ethylen-Propylen-Dien (EPDM) Kautschuk, Naturkautschuk, Butylkautschuk, Ethylen- und Vinylacetat-Copolymer (EVA), Ethylen- und Ethylenacrylat-Copolymer (EEA), Ethylen- und Butylacrylat-Copolymeren und Ethylen-Alpha-Olefin-Copolymeren oder einer Mischung davon.

5. Energie- und/oder Telekommunikationskabel nach einem der vorstehenden Ansprüche, bei dem das anorganische Phosphat ein Kation aufweist, bei dem es sich handeln kann um: Al, Zn, Cd, Fe, Sn, Mn, Ni, Co, B, Sb, W, Mo, Zr, Cu, Ga, In, Be, Mg, Ca, Sr, Ba, Na, Li, K, Rb, Cs und Mischungen davon.

6. Energie- und/oder Telekommunikationskabel nach einem der vorstehenden Ansprüche, wobei das Phyllosilikat ein 2:1 Typ Phyllosilikat mit laminarer oder nadelförmiger Morphologie ist.

7. Energie- und/oder Telekommunikationskabel nach Anspruch 6, wobei das 2:1-Phyllosilikat ein Dioctaeder-Smektit, Trioctaeder-Smektit, Sepiolith, Attapulgit oder Mischungen davon ist.

8. Energie- und/oder Telekommunikationskabel nach Anspruch 7, wobei der Smektit vom Montmorillonit-, Saponit-, Stevensit-, Beidellit-, Nicht-Tronit-, Hectorit-Typ oder Mischungen davon ist.

## Revendications

1. Câble d'alimentation et/ou de télécommunication comprenant un ou plusieurs conducteurs électriques et/ou optiques recouverts d'au moins une couche électriquement isolante, dans lequel ladite couche isolante comprend :
a) un polymère organique extrudable ou un mélange de plusieurs polymères organiques extrudables sélectionnés parmi une oléfine, un vinyle, un acrylate et un méthacrylate ;
b) un phosphate inorganique agencé hiérarchiquement sur des phyllosilicates en une quantité située entre 1 et 30 parties en poids pour 100 parties du polymère selon a) ; et
c) d'autres charges inorganiques secondaires, ayant au moins l'un des composés suivants ou un mélange de deux ou plus de ces composés : les hydroxydes métalliques, les oxydes métalliques, les kaolins, les silices, les borates, les stannates, les molybdates, les graphites et/ou les verres, en une quantité située entre 100 et 200 phr pour 100 parties du polymère selon a).

2. Câble d'alimentation et/ou de télécommunication, selon la revendication 1, comprenant en outre une couche protectrice entourant lesdits un ou plusieurs conducteurs électriques et/ou optiques recouverts d'au moins une couche électriquement isolante, dans lequel ladite couche protectrice comprend :
a) un polymère organique extrudable ou un mélange de plusieurs polymères organiques extrudables sélectionnés parmi une oléfine, un vinyle, un acrylate et un méthacrylate ;
b) un phosphate inorganique agencé hiérarchiquement sur des phyllosilicates en une quantité située entre 1 et 30 parties en poids pour 100 parties du polymère selon a) ; et
c) d'autres charges inorganiques secondaires, ayant au moins l'un des composés suivants ou un mélange de deux ou plus de ces composés : les hydroxydes métalliques, les oxydes métalliques, les kaolins, les silices, les borates, les stannates, les molybdates, les graphites et/ou les verres, en une quantité située entre 100 et 200 phr pour 100 parties du polymère selon a).

3. Câble d'alimentation et/ou de télécommunication, selon la revendication 1 ou 2, dans lequel le polymère d'oléfine comprend l'un ou une combinaison des composés suivants : les homopolymères, les copolymères d'éthylène et/ou de propylène, les polyesters, les polyéthers, les copolymères de polyester-polyéther et/ou les mélanges de ceux-ci.

4. Câble d'alimentation et/ou de télécommunication, selon la revendication 3, dans lequel ledit polymère d'oléfine est sélectionné parmi un polyéthylène (PE), un polypropylène (PP), un copolymère thermoplastique de propylène-éthylène, un caoutchouc d'éthylène-propylène (EPR) ou d'éthylène-propylène-diène (EPDM), un caoutchouc naturel, un caoutchouc butyle, un copolymère d'éthylène et d'acétate de vinyle (EVA), un copolymère d'éthylène et d'acrylate d'éthylène (EEA), les copolymères d'éthylène et d'acrylate de butyle, et les copolymères éthylène-alpha-oléfine, ou un mélange de ceux-ci.

5. Câble d'alimentation et/ou de télécommunication, selon l'une quelconque des revendications précédentes, dans lequel le phosphate inorganique présente un cation qui peut être : Al, Zn, Cd, Fe, Sn, Mn, Ni, Co, B, Sb, W, Mo, Zr, Cu, Ga, In, Be, Mg, Ca, Sr, Ba, Na, Li, K, Rb, Cs et les mélanges de ceux-ci.

6. Câble d'alimentation et/ou de télécommunication, selon l'une quelconque des revendications précédentes, dans lequel le phyllosilicate est un phyllosilicate de type 2 : 1 de morphologie laminaire ou aciculaire.

7. Câble d'alimentation et/ou de télécommunication, selon la revendication 6, dans lequel le phyllosilicate 2 : 1 est une smectite dioctaédrique, une smectite trioctaédrique, une sépiolite, une attapulgite ou des mélanges de celles-ci.

8. Câble d'alimentation et/ou de télécommunication, selon la revendication 7, dans lequel la smectite est de type montmorillonite, saponite, stévensite, beidellite, nontronite, hectorite ou les mélanges de celles-ci.
